Europäisches Patentamt

European Patent Office

Office européen des brevets

(19)

(11) Veröffentlichungsnummer: **0 200 084**
**B1**

(12) **EUROPÄISCHE PATENTSCHRIFT**

(45) Veröffentlichungstag der Patentschrifft:
07.02.90

(21) Anmeldenummer: 86105146.4

(22) Anmeldetag: 15.04.86

(51) Int. Cl. $^5$: **B 60 J   7/04**

(54) Fahrzeugdach mit einer einen Deckel aufnehmenden Dachkassette.

(30) Priorität: 30.04.85 DE 3515527

(43) Veröffentlichungstag der Anmeldung:
05.11.86 Patentblatt 86/45

(45) Bekanntmachung des Hinweises auf die Patenterteilung:
07.02.90 Patentblatt 90/06

(84) Bennante Vertragsstaaten:
DE FR GB IT SE

(56) Entgegenhaltungen:
DE-A-2 317 546
DE-A-2 856 015
DE-A-3 044 313
DE-U-8 132 258
FR-A-1 438 708
FR-A-2 577 175
GB-A-2 113 632
US-A-2 062 177

PATENT ABSTRACTS OF JAPAN, Band 6, Nr. 69 (M-125) 947 , 30. April 1982; & JP-A-57 7768 (NISSAN JIDOSHA K.K.) 14-01-1982

(73) Patentinhaber: **Bayerische Motoren Werke Aktiengesellschaft**
**Patentabteilung AJ-3 Postfach 40 02 40 Petuelring 130**
**D-8000 München 40 (DE)**

(72) Erfinder: **Clausen-Schaumann, Andreas**
**Jägerstrasse 15**
**D-8139 Bernried (DE)**

(74) Vertreter: **Dexheimer, Rolf**
**Bayerische Motoren Werke Aktiengesellschaft Postfach 40 02 40 Petuelring 130 - AJ-31**
**D-8000 München 40 (DE)**

EP 0 200 084 B1

Beschreibung

Die Erfindung betrifft ein Fahrzeugdach mit einer einen Deckel aufnehmenden Dachkassette, entsprechend dem Oberbegriff im Hauptanspruch.

Ein derartiges Fahrzeugdach ist aus der DE-A-2 543 734 bekannt. Im Bereich der Ecken sind an der Dachkassette schräg zur Seite gerichtete, federnd ausgebildete Anschlußkonsolen vorgesehen, die mit entsprechenden Flächen am Dachholm zur Zentrierung der Dachkassette zusammenwirken. Durch die federnd ausgebildeten Anschlußkonsolen ist nur eine grobe, jedoch keine lagegenaue Zentrierung der Dachkassette möglich Die verhältnismäßig schwere Dachkassette ist von mehreren Arbeitskräften in ungünstiger Stellung über Kopf mühsam zu positionieren und zu befestigen.

Es ist deshalb Aufgabe der Erfindung, ein Fahrzeugdach mit einer einen Deckel aufnehmenden Dachkassette nach dem Oberbegriff des Hauptanspruchs anzugeben, bei dem die Montage der Dachkassette erleichtert und mit geringem Zeitaufwand durchzuführen ist.

Diese Aufgabe ist durch die im Kennzeichen des Hauptanspruches angegebenen Merkmale gelöst.

Dank dieser Maßnahme ist die Dachkassette zur lagegenauen Montage an einem Fahrzeugdach lediglich vom Fahrgastraum her leicht schräg gestellt dem Fahrzeugdach anzunähern und horizontal zu verlagern, damit sich das Aufnahmeelement und die Lasche gegenseitig zentrieren und anschließend die Dachkassette nach oben in die Einbaulage geschwenkt und dort rasch befestigt werden kann. Durch diese Zentriereinrichtung kann auch eine automatisierte Montage der Dachkassette vorgenommen werden.

In einer vorteilhaften Ausgestaltung der Erfindung sind an dem Fahrzeugdach oder an der Dachkassette elastisch nachgiebige Federnasen ausgebildet, die in Einbaulage der Dachkassette einen Randbereich der Dachkassette oder eine Kante am Fahrzeugdach hintergreifen. Bei entsprechender Ausbildung der Federnasen ist eine zusätzliche Befestigung der Dachkassette an dem Fahrzeugdach z. B. mittels Schrauben nicht erforderlich. Ist eine zusätzliche Befestigung doch vorgesehen, so kann diese frei von der Last der Dachkassette erfolgen, da sich diese an den Federnasen und der vorderen Aufnahme abstützt.

Weitere zweckmäßige Ausgestaltung der Erfindung sind Gegenstand von Unteransprüchen.

Ein Ausführungsbeispiel der Erfindung wird anhand einer Zeichnung näher erläutert. Es zeigen

Fig. 1 einen Längsschnitt des Fahrzeugdaches in einem vor der Dachöffnung befindlichen Bereich,

Fig. 2 einen Querschnitt im seitlichen Randbereich der Dachöffnungen, mit vertikalen Zentrierflächen,

Fig. 3 einen weiteren Querschnitt in dem Randbereich nach Fig. 2, mit Schlauchdichtung und schrägen Vorzentrierflächen,

Fig. 4 einen weiteren Querschnitt in dem Randbereich nach Fig. 2, mit einer am Fahrzeugdach ausgebildeten Federnase zur Abstützung der Dachkassette,

Fig. 5 eine der Fig. 4 entsprechende Ansicht mit einer Federnase, die an einer lösbar mit dem Fahrzeugdach verbundenen Federklammer ausgebildet ist,

Fig. 6 eine der Fig. 4 entsprechende Ansicht, wobei die Federnase an einer mit der Dachkassette verbundenen Federklammer ausgebildet ist,

Fig. 7 eine auf den Deckel aufgesetzte Zentrierhaube in perspektivischer Ansicht.

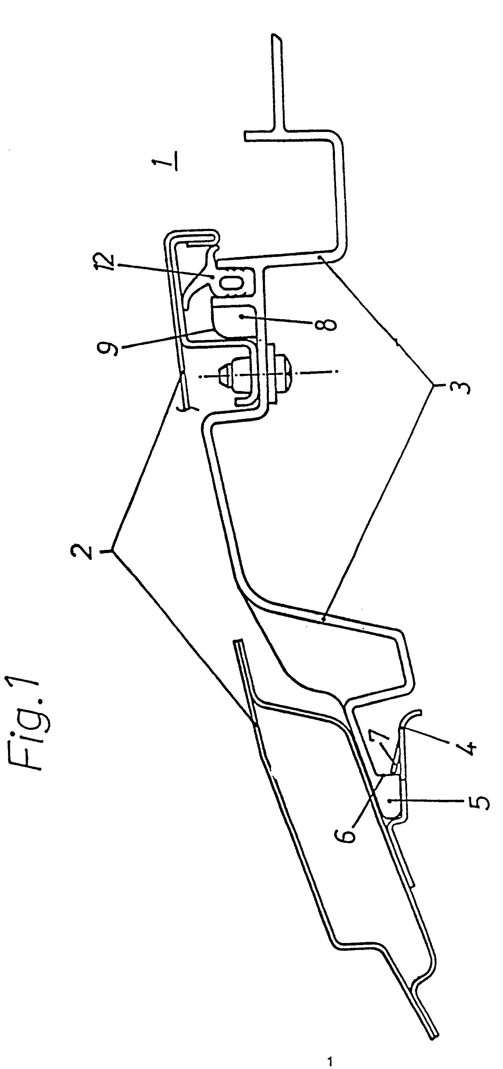

Der in Fig. 1 in einem Längsschnitt dargestellte, vor der Dachöffnung 1 liegende Bereich eines Fahrzeugdaches 2 weist eine Zentriereinrichtung zur lagegenauen Fixierung einer Dachkassette 3 auf, die einen nicht dargestellten Deckel aufnimmt. Die Dachaußenfläche ist dabei nur bereichsweise dargestellt. Die Zentriereinrichtung weist ein im Bereich vor der Dachöffnung 1 an der Unterseite des Fahrzeugdaches 2 angeordnetes Aufnahmeelement 4 mit einer allseits trichterförmigen, etwa horizontal verlaufenden, nach hinten gerichteten Mündung auf. Eine vom vorderen Bereich der Dachkassette 3 nach vorne abstehende, in die Mündung eingeschobene Lasche 5 ist von dem Aufnahmeelement 4 seitlich und in Fahrzeuglängsrichtung fixiert. Dazu ist im vorderen unteren Bereich der Lasche 5 ein Absatz 6 ausgebildet, der von einer Federraste 7 in der trichterformigen Mündung hintergriffen ist. Das Aufnahmeelement 4, der Absatz 6 und die Federraste 7 können so ausgebildet werden, daß die in die Mündung eingeschobene Dachkassette 3 nur noch nach oben in die zur Befestigung vorgesehe Einbaulage geschwenkt werden kann und keine weiteren Zentrierhilfen erfordert. Das Ausführungsbeispiel dagegen ist so ausgeführt, daß die bei der Montage der Dachkassette 3 zunächst von der Federraste 7 hintergriffene Lasche 5 und damit die Dachkassette 3 nicht nur eine Schwenkbewegung um eine Querachse nach oben in die Einbaulage ausführen kann, sondern auch etwas zur Seite und in Fahrzeuglängsrichtung verlagerbar ist. Durch das Hochschwenken der Dachkassette 3 erfolgt dann die lagegenaue Fixierung der Dachkassette 3. Zur genauen Fixierung der Dachkassette 3 in Fahrzeuglängsrichtung sind im vorderen Randbereich der Dachöffnungen 1 wenigstens zwei mit seitlichem Abstand von der Dachkassette 3 nach oben abstehende Zentrierrippen 8 vorgesehen, die mit jeweils ihrer Vorderseite mit einer vertikalen Fläche am Fahrzeugdach 2 zusammenwirken. Durch diese Zentrierrippen 8 und den an der Federraste 7 anliegenden Absatz 6 wird die Dachkassette 3 in ihrer Lage in Fahrzeuglängsrichtung festgelegt. Um ein reibungsloses Hochschwenken der Dachkassette 3 in die Einbaulage zu ermöglichen, sind die vorderen Oberkanten 9 der Stützrippen 8 abgerundet.

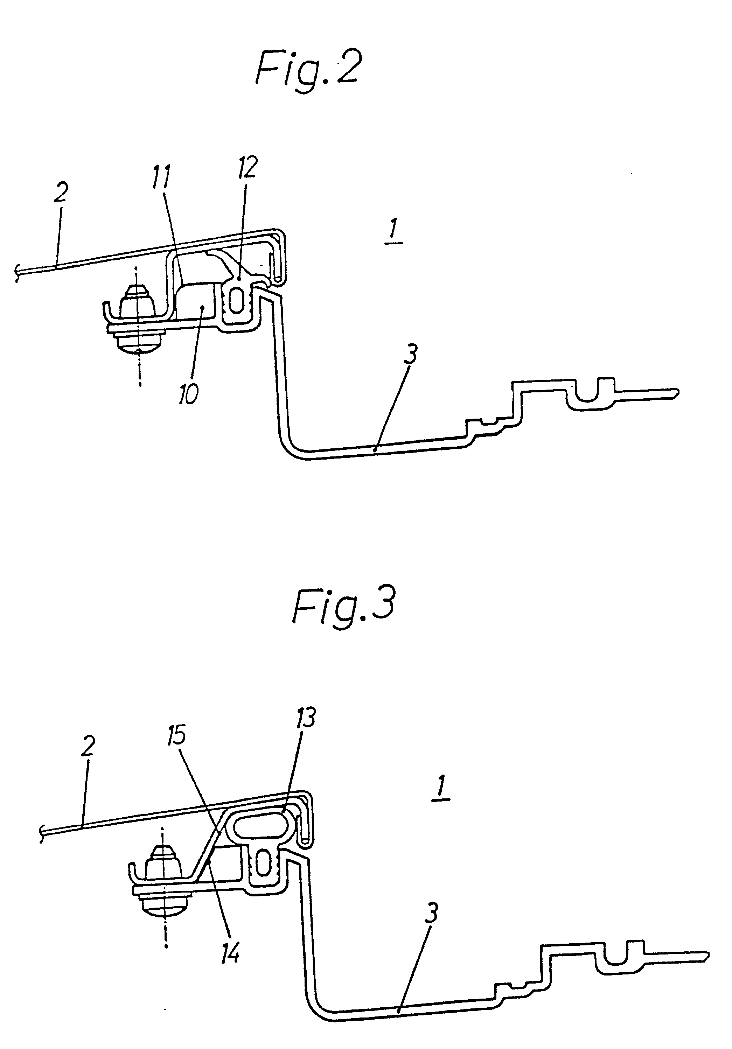

Eine seitliche lagegenaue Fixierung der Dachkassette 3 erfolgt bei in das Aufnahmeelement eingeschobener Lasche ebenfalls während des Hochschwenkens der Dachkassette 3 in die Einbaulage über die in Fig. 2 einseitig hintereinander dargestellten Stützrippen 10. Zwei derartige Stützrippen 10 stehen von beiden seitlichen Randbereichen mit Längsabstand voneinander von der Dachkassette 3 nach oben ab und wirken beim Hochschwenken der Dachkassette 3 mit ihren äußeren Seitenflächen mit vertikal verlaufenden, am Fahrzeugdach ausgebildeten Flächen zusammen. Die außenliegenden oberen Seitenkanten 11 der Stützrippen 10 sind abgerundet und erleichtern dadurch die Zentrierung. In Fig. 1 und Fig. 2 ist ferner eine im Randbereich zwischen Dachkassette 3 und Fahrzeugdach 2 um Dachöffnung 1 umlaufende Lippendichtung 12 vorgesehen. Es ist auch möglich, Stützrippen nur auf einer Seite der Dachkassette vorzusehen, die eine seitliche Fixierung der Dachkassette mit ihren beiden gegenüberliegenden Seitenflächen bewirken. Es ist auch möglich, das Aufnahmeelement nicht fest, sondern lösbar mit dem Fahrzeugdach zu verbinden.

Der in Fig. 3 dargestellte Querschnitt im seitlichen Randbereich der Dachöffnung 1 weist außerdem eine Vorzentriereinrichtung und alternativ zu der in Fig. 1 und Fig. 2 dargestellten Lippendichtung eine Schlauchdichtung 13 auf. Eine seitliche Vorzentrierung der Dachkassette 3 wird durch schräg zur Seite geneigte Zentrierflächen 14 erreicht, die im seitlichen Randbereich der Dachkassette 3 angeordnet sind und mit entsprechenden Wandflächen 15 am Fahrzeugdach 2 zusammenwirken. In Einbaulage der Dachkassette 3 ist zwischen den Zentrierflächen 14 und den Wandflächen 15 ein kleiner Abstand.

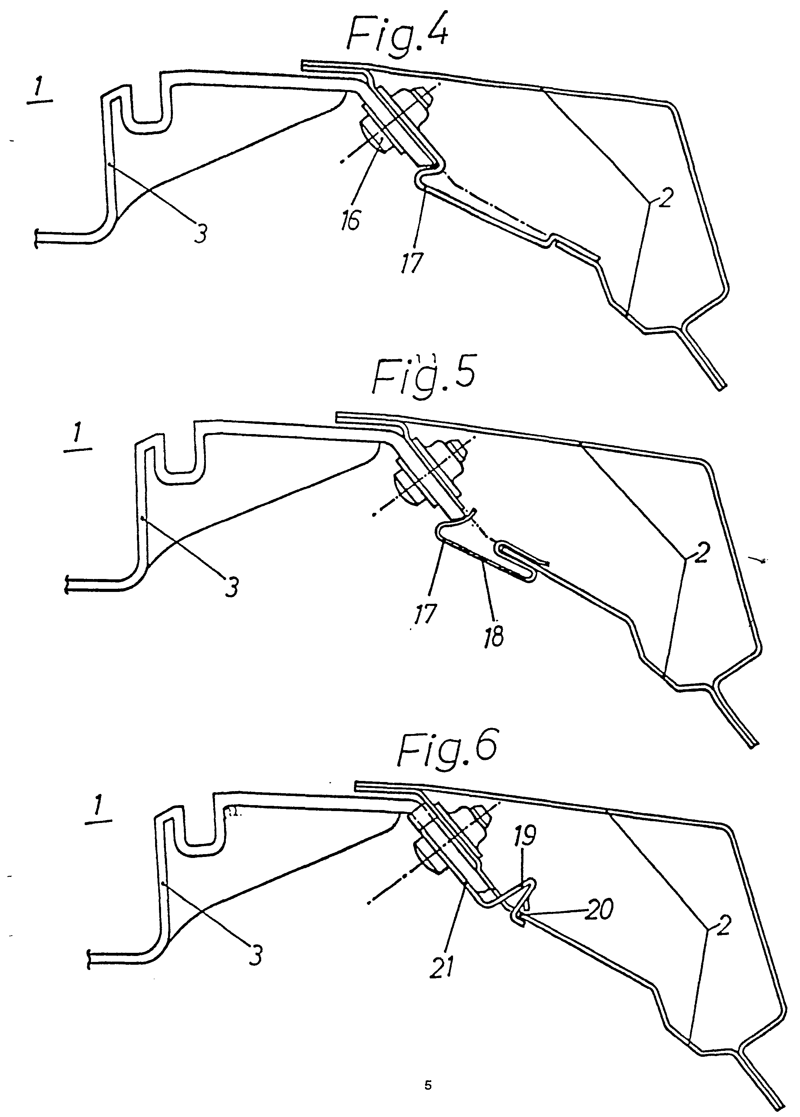

Nachdem die Dachkassette 3, wie in Fig. 4, in die Einbaulage gebracht und lagegenau zentriert ist, kann diese an dem Fahrzeugdach 2 befestigt werden, z. B. mittels Schrauben 16. Um dies frei von der Last der verhältnismäßig schweren Dachkassette durchführen zu können, sind am Fahrzeugdach 2 an wenigstens zwei gegenüberliegenden Randbereichen der Dachöffnung 1, unterhalb des Fahrzeugdaches 2, elastisch nachgiebige, mit Abstand voneinander angeordnete Federnasen 17 vorgesehen, die jeweils einen Randbereich der Dachkassette 3 zu ihrer Abstützung untergreifen.

Jede dieser Federnasen 17 kann auch an einer Federklammer 18, wie in Fig. 5, ausgebildet sein, die lösbar mit dem Fahrzeugdach 2 verbindbar ist.

Die in Fig. 6 dargestellte Federnase 19, die zur Abstützung der Dachkassette 3 hinter eine am Fahrzeugdach 2 ausgebildete Kante 20 greift, ist durch eine Federklammer 21 gebildet, die an einem Stirnbereich mit einem Seitenabschnitt der Dachkassette 3 verbunden ist.

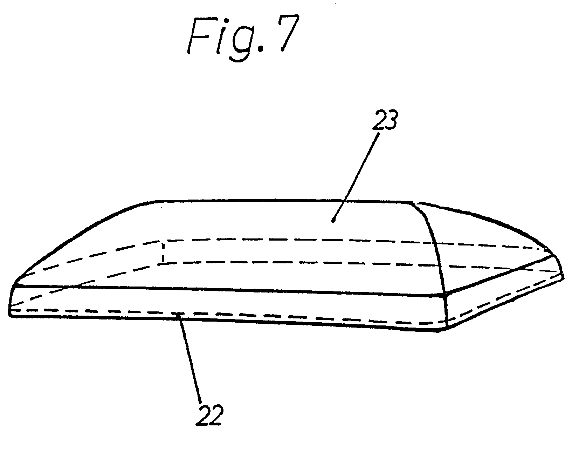

Soll der die Dachöffnung verschließende, in der Dachkassette vormontierte Deckel 22 zusammen mit der Dachkassette montiert und befestigt werden, so ist, wie in Fig. 7 dargestellt, auf den Deckel 22 eine Zentrierhaube 23 aufzusetzen, die den Deckel 22 schützt und gegenüber der Dachöffnung zentriert. Die Zentrierhaube 23 ist dazu an ihrer dem Deckel 22 zugwandten Unterseite mit eine Vertiefung zur Aufnahme des Deckels 22 versehen. Am Umfang des Deckels 22 ist ein elastisch nachgiebiges Dichtungselement angeordnet, das beim Aufsetzen der Zentrierhaube 23 auf den Deckel 22 zusammengedrückt wird. Die Zentrierhaube 23 ist in den äußeren Abmessungen so gestaltet, daß sie durch die Dachöffnung hindurchgleiten und dabei den Deckel 22 gegenüber der Dachöffnung zentrieren kann. Nach erfolgter Montage wird die Zentrierhaube 23 nach oben abgezogen, wobei sich das Dichtungselement entspannt und mit dem Rand der Dachöffnung in Berührung gelangt.

## Patentansprüche

1. Fahrzeugdach (2) mit einer einen Deckel aufnehmenden Dachkassette (3), die im Randbereich einer Dachöffnung (1) von unten mit dem Fahrzeugdach (2) verbindbar und über eine Zentriereinrichtung (4, 5) mit Zentrierwänden positionierbar ist, dadurch gekennzeichnet, daß die Zentriereinrichtung (4, 5) ein am Fahrzeugdach (2) oder an der Dachkassette (3) angeordnetes Aufnahmeelement (4) mit einer trichterförmigen, in Einbaulage etwa horizontal verlaufenden Mündung aufweist, die eine von dem anderen Teil, von der Dachkassette (3) oder von dem Fahrzeugdach (2), abstehende Lasche (5) beim Einschieben in die Mündung so zentriert, daß die Dachkassette (3) um eine durch die Zentriereinrichtung (4, 5) gebildete horizontale Achse nach oben in die Einbaulage schwenkbar ist.

2. Fahrzeugdach nach Anspruch 1, dadurch gekennzeichnet, daß das Aufnahmeelement (4) im vorderen mittleren Randbereich der Dachöffnung (1) unterhalb des Fahrzeugdaches (2) mit seiner Mündung nach hinten gerichtet angeordnet und die Lasche (5) am vorderen Bereich der Dachkassette (3) vorgesehen ist.

3. Fahrzeugdach nach Anspruch 1 oder 2, dadurch gekennzeichnet, daß im vorstehenden Randbereich der Lasche (5) ein Absatz (6) ausgebildet ist, der bei vollständig in das Aufnahmeelement (4) eingeschobener Lasche (5) von einer Federraste (7) in der trichterförmigen Mündung hintergriffen ist.

4. Fahrzeugdach nach Anspruch 1, dadurch gekennzeichnet, daß die Zentrierinrichtung ferner wenigstens eine von einem Randbereich der Dachkassette (3) nach oben abstehende Zentrierrippe (8, 10) aufweist, die wenigstens einer ihrer Seitenwände mit einer entsprechenden vertikalen Fläche am Fahrzeugdach (2) zur genauen Fixierung der Dachkassette (3) zusammenwirkt.

5. Fahrzeugdach nach Anspruche 1, dadurch gekennzeichnet, daß zum Festhalten der Dachkassette (3) in Einbaulage, elastisch nachgiebige Federnasen (17, 19) am Fahrzeugdach (2) oder an der Dachkassette (3) vorgesehen sind, die in Einbaulage jeweils einen Randbereich der Dachkassette (3) oder eine Kante (20) am Fahrzeugdach (2) hintergreifen.

6. Fahrzeugdach nach Anspruch 5, dadurch gekennzeichnet, daß die Federnasen (17, 19) an lösbar mit dem Fahrzeugdach (2) oder der Dachkassette (3) verbundenen Federklammern (18, 21) ausgebildet sind.

7. Fahrzeugdach nach Anspruch 1, dadurch gekennzeichnet, daß das Aufnahmeelement (4) lösbar mit dem Fahrzeugdach (2) verbunden ist.

8. Fahrzeugdach nach Anspruch 1, mit in der Dachkassette vormontiertem Deckel, dadurch gekennzeichnet, daß auf den Deckel (22) eine nach oben sich verjüngende Zentrierhaube (23) aufsetzbar ist, die den Deckel (22) bei der Montage der Dachkassette (3) schützt und gegenüber der Dachöffnung (1) zentriert.

**Claims**

1. A vehicle roof (2) having a roof tray (3) accommodating a lid, which tray is connectable in the marginal region of a roof opening (1) from beneath with the vehicle roof (2) and is positionable by means of a centring device (4, 5) with centring walls, characterised in that the centring device (4, 5) comprises a reception element (4) arranged on the vehicle roof (2) or on the roof tray (3), having a funnel-shaped mouth extending approximately horizontally in the installed position, which mouth centres a tab (5) protruding from the other part, from the roof tray (3) or from the vehicle roof (2), in pushing into the mouth so that the roof tray (3) is pivotable about a horizontal axis formed by the centring device (4, 5), upwards into the installation position.

2. A vehicle roof according to Claim 1, characterised in that the reception element (4) is arranged in the forward middle marginal region of the roof opening (1), beneath the vehicle roof (2), with its mouth directed to the rear, and the tab (5) is provided on the forward region of the roof tray (3).

3. A vehicle roof according to Claim 1 or 2, characterised in that, in the protruding marginal region of the tab (5), a step (6) is formed behind which, when the tab (5) is pushed completely into the reception element (4), a spring catch (7) in the funnel-shaped mouth engages.

4. A vehicle mouth according to Claim 1, characterised in that the centring device further comprises at least one centring rib (8, 10) standing upwards from a marginal region of the roof tray (3), which rib co-operates by at least one of its side walls with a corresponding vertical face on the vehicle roof (2) for the exact fixing of the roof tray (3).

5. A vehicle roof according to Claim 1, characterised in that, for holding the roof tray (3) fast in the installed position, elastically-yieldable spring noses (17, 19) are provided on the vehicle roof (2) or on the roof tray (3), which in the installed condition each grasp behind a marginal region of the roof tray (3) or an edge (20) on the vehicle roof (2).

6. A vehicle roof according to Claim 5, characterised in that the spring noses (17, 19) are formed on spring clips (18, 21) detachably connected with the vehicle roof (2) or the roof tray (3).

7. A vehicle roof according to Claim 1, characterised in that the reception element (4) is detachably connected with the vehicle roof (2).

8. A vehicle roof according to Claim 1 with a lid fitted in advance in the roof tray, characterised in that an upwardly-tapering centring hood (23) can be set upon the lid (22), which hood protects the lid (22) in the fitting of the roof tray (3) and centres it in relation to the roof opening (1).

**Revendications**

1. Toit de véhicule avec un coffret de toit (3) recevant un toit ouvrant, qui peut être fixé au bord d'une ouverture de toit (1) par le bas, avec le toit du véhicule (2), qui peut être positionné à l'aide d'un dispositif de centrage (4, 5) avec des parois de centrage, caractérisé en ce que le dispositif de centrage (7, 8) présente un élément de réception (4) disposé sur le toit du véhicule (2) ou sur le coffret de toit (3), avec une ouverture en forme d'entonnoir se déroulant horizontalement en position de montage, qui centre par insertion dans l'ouverture une languette (5) se détachant de l'autre pièce, du coffret de toit (3) ou du toit du véhicule (2), de sorte que le coffret de toit (3) peut être pivoté vers le haut en position de montage autour d'un axe horizontal passant par le dispositif de centrage (4, 5).

2. Toit de véhicule selon la revendication 1, caractérisé en ce que l'élément de réception (4) est disposé dans le bord médian avant de l'ouverture de toit (1) en-dessous du toit du véhicule (2) avec son ouverture dirigée vers l'arrière et la languette (5) est prévue sur le bord avant du coffret de toit.

3. Toit de véhicule selon la revendication 1 ou 2, caractérisé en ce qu'un rebord (6) est formé dans le bord avant de la languette (5), qui, lorsque la languette (5) est totalement insérée dans l'élément de réception (4), est retenue par une butée à ressort (7) dans l'ouverture en entonnoir.

4. Toit de véhicule selon la revendication 1, caractérisé en ce que le dispositif de centrage présente en outre au moins une nervure de centrage (8, 10) se dressant vers le haut depuis un bord du coffret de toit, qui coopère avec au moins une de ses parois latérales avec une surface verticale correspondante du toit du véhicule (2) pour fixer avec précision le coffret de toit.

5. Toit de véhicule selon la revendication 1, caractérisé en ce que sont prévus sur le toit du véhicule (2) ou sur le coffret de toit (3) des nez élastiques (17, 19) pour maintenir le coffret de toit (3) en position de montage, qui s'insèrent en position de montage dans un bord du coffret de toit (3) ou dans un bord du toit du véhicule (2).

6. Toit de véhicule selon la revendication 5, caractérisé en ce que les nez élastiques (17, 19) sont constitués de pinces élastiques (18, 21) liées de manière amovible au toit du véhicule (2) ou au coffret de toit (3).

7. Véhicule selon la revendication 1, caractérisé en ce que l'élément de réception (4) est lié de manière amovible au toit du véhicule (2).

8. Toit de véhicule selon la revendication 1, avec un toit ouvrant déjà monté dans un coffret de toit, caractérisé en ce qu'une coiffe de centrage allant en diminuant vers le haut (23) peut être placée sur le toit ouvrant (22) qui protège le toit ouvrant (22) lors du montage du coffret de toit et le centre dans l'ouverture du toit.

Fig.1

EP 0 200 084 B1

# Fig.2

# Fig.3

## Fig.4

## Fig.5

## Fig.6

## Fig. 7